Europäisches Patentamt

European Patent Office

Office européen des brevets

(11) Veröffentlichungsnummer: **0 327 884 B1**

# EUROPÄISCHE PATENTSCHRIFT

(45) Veröffentlichungstag der Patentschrift: **26.01.94**

(21) Anmeldenummer: **89101245.2**

(22) Anmeldetag: **25.01.89**

Die Akte enthält technische Angaben, die nach dem Eingang der Anmeldung eingereicht wurden und die nicht in dieser Patentschrift enthalten sind.

(51) Int. Cl.5: **C08K 7/14**, C08K 3/34, C08L 81/02, C08G 75/02

(54) **Gefüllte Thermoplaste mit geringer Schwindungsanisotropie.**

(30) Priorität: **05.02.88 DE 3803475**

(43) Veröffentlichungstag der Anmeldung: **16.08.89 Patentblatt 89/33**

(45) Bekanntmachung des Hinweises auf die Patenterteilung: **26.01.94 Patentblatt 94/04**

(84) Benannte Vertragsstaaten: **BE DE FR GB IT**

(56) Entgegenhaltungen:
EP-A- 0 103 869
DE-A- 2 728 233
US-A- 4 365 037
US-A- 4 436 865

PATENT ABSTRACTS OF JAPAN, Band 11, Nr. 381 (C-464) (2828), 12. Dezember 1987; & JP-A-62 151 462

(73) Patentinhaber: **BAYER AG**

**D-51368 Leverkusen(DE)**

(72) Erfinder: **Wehnert, Wolfgang, Dr.**
**Bodelschwinghstrasse 14**
**D-4150 Krefeld 1(DE)**
Erfinder: **Reinking, Klaus, Dr.**
**Robert-Stolz-Strasse 16 b**
**D-5632 Wermelskirchen 1(DE)**
Erfinder: **Bier, Peter, Dr.**
**222 Essex Knoll Dr.**
**Coraopolis, PA 15108(US)**
Erfinder: **Kraft, Klaus, Dr.**
**Doerperhofstrasse 15**
**D-4150 Krefeld 1(DE)**
Erfinder: **Tresper, Erhard, Dr.**
**Moerser Strasse 394**
**D-4150 Krefeld 11(DE)**

**Beschreibung**

Die Erfindung betrifft Mischungen aus Polyarylensulfiden, vorzugsweise Polyphenylensulfid (PPS), Glasfasern und Glimmer Micro Mica W1®, die geringe Schwindungsanisotropie zeigen.

Polyarylensulfide und ihre Herstellung, sowie deren Abmischungen mit verschiedensten Zusatzstoffen sind bekannt (z.B. US-PS 3 354 129, EP-OS 171 021).

Unverstärktes PPS hat unbefriedigende mechanische Eigenschaften für Anwendungen im Spritzgußbereich, insbesondere sind Biege- oder Zugfestigkeit und Elastizitätsmodul für die Praxis häufig nicht ausreichend, die Verarbeitungsschwindung dagegen ist zu hoch. Es hat sich daher als von Vorteil erwiesen, PPS z.B. durch Zusatz von Verstärkungsstoffen, insbesondere Glasfasern in den genannten Eigenschaften zu verbessern. So wird beispielsweise auf dem Markt ein mit 40 Gew.-% glasfaserverstärktes PPS angeboten.

Diese Produkte haben jedoch den Nachteil gegenüber unverstärktem PPS, daß durch den hohen Glasfasergehalt eine stärke Anisotropie im Schwindungsverhalten zu beobachten ist. Um diesen Nachteil zu umgehen, ist es z.B. bekannt, lediglich mineralische, nicht faserförmige Füllstoffe zuzusetzen. Solche Formmassen ergeben jedoch mechanisch nicht immer ganz befriedigende Formteile (z.B. DE-AS 2 728 233). Für zahlreiche Anwendungen haben sich Formmassen aus PPS mit 30 Gew.-% Glasfasern und 30 Gew.-% Talkum als vorteilhaft erwiesen. Diese Produkte sind ebenfalls handelsüblich.

Allerdings zeigen auch sie eine ähnlich hohen Schwindungsanisotropie wie das mit 40 Gew.-% glasfaserverstärkte PPS.

Durch die Verwendung von Talkum unter gleichzeitiger Verminderung des Glasgehaltes muß man auch ein an sich unerwünschtes Absinken der mechanischen Eigenschaftswerte (Biegefestigkeit, Randfaserdehnung, (Schlag)-Zähigkeit) in Kauf nehmend. Dennoch werden Produkte aus Glasfaser und Talkum aufgrund ihrer geringeren absoluten Schwindungswerte technisch verwendet. Der folgerichtige Schluß, den Glasfasergehalt nunmehr zur Verbesserung der Eigenschaftswerte wieder zu erhöhen, verbietet sich durch den bereits für Thermoplaste unüblich hohen Füllgrad, was Probleme bei Herstellung und Verarbeitung erwarten ließ.

Es wurde nun gefunden, daß bei der Kombination von Polyarylensulfiden, vorzugsweise PPS, mit Glasfasern und Glimmer Micro Mica W1® in etwa gleichen Gewichtsverhältnissen wie bei den Abmischungen von PPS mit Glasfasern und Talkum die Anisotropie im Schwindungsverhalten auf einem mit den genannten Abmischungen aus Glasfasern und Talkum vergleichbaren Niveau gehalten werden kann, wobei gleichzeitig eine Verbesserung der mechanischen Eigenschaften eintritt, so daß die Eigenschaftswerte der genannten, nur glasgefüllten Mischungen, sogar übertroffen werden können.

Ein weiterer Vorteil der erfindungsgemäßen Mischungen ist, daß man bei Erhalt gleicher Eigenschaften, wie sie die genannten glas-/talkumgefüllten Abmischungen zeigen, bei den erfindungsgemäßen glas-/glimmergefüllten Abmischungen das Mischungsverhältnis unter Absenkung des Glasgehaltes nunmehr so andern kann, daß Abmischungen entstehen, die eine erhebliche Senkung der Anisotropie des Schwindungsverhaltens ermöglichen.

Gegenstand der Erfindung sind daher schwindungsarme Mischungen aus

A) 20 bis 80 Gew.-% Polyarylensulfiden, vorzugsweise PPS,
B) 10 bis 60, vorzugsweise 15 bis 50 Gew.-% Glasfasern und
C) 60 bis 10, handelsüblichen Glimmer Micro Mica W1®,
wobei sich die Angabe Gew.-% auf die Summe des Gewichts der Komponenten A + B + C bezieht und gegebenenfalls 0,1 bis 10 Gew.-% weiteren üblichen Zusatzstoffen, bezogen auf das Gewicht der Summe der Komponenten A + B + C.

Formkörper aus den erfindungsgemäßen Mischungen haben gute mechanischen Eigenschaften und zeigen hervorragendes isotropes Verhalten.

Erfindungsgemäß werden handelsübliche, gegebenenfalls auf übliche Art geschlichtete Glasfasern eingesetzt. Sie haben einen Durchmesser von 1,5 bis 17 μm, vorzugsweise 5 bis 13 μm. Ihre Länge beträgt 0,01 bis 30 mm, vorzugsweise 0,05 bis 10 mm. Es können auch Endlosfasern eingesetzt werden und/oder Herstellungsverfahren gewählt werden, bei denen die Länge der Faser in der fertigen Abmischung 2 bis 10, bevorzugt 3 bis 5 mm beträgt.

Erfindungsgemäß kann handelsüblicher, gegebenenfalls auf übliche Art vorbehandelter Glimmer Micro Mica W1® eingesetzt werden. Der mittlere Teilchendurchmesser beträgt 0,001 bis 1 mm, die Dicke der Teilchen 0,0001 bis 0,1 mm.

Als weitere übliche Zusatzstoffe können z.B. übliche Pigmente, Entformungsmittel (z.B. E-Wachs) Stabilisatoren andere mineralische Füllstoffe u.s.w. zugesetzt werden.

Die erfindungsgemäßen Mischungen können auf übliche Weise zu Formteilen, Fasern und Folien u.s.w. verarbeitet werden. Die erfindungsgemäßen Mischungen können generell in vorteilhafter Weise dort verwendet werden, wo thermoplastische verarbeitbare Massen eingesetzt werden.

Beispiel 1

Herstellung einer erfindungsgemäßen Mischung

Gemischt wurden 40 Gew.-Teile PPS (z.B. hergetellt nach EP-OS 171 021) mit 30 Gew.-Teilen handelsüblicher geschlichteter Schnitt-Glasfaser CS 7916, 10 $\mu$m Durchmesser der BAYER AG, und mit 30 Gew.-Teilen handelsüblichem Glimmer (Micro Mica W1® Norwegian Talc, wobei 91 Gew.-% der Teilchen kleiner sind als 10 $\mu$m) auf einer ZSK 30 von Werner und Pfleiderer bei 320°C.

Die Mischung wurde zu 80x10x4 mm-Stäben und zu 80x150x3 mm-Schwindungsmeßplatten mit Anguß an der Schmalseite verspritzt.

Es wurden Biegefestigkeit, Randfaserdehnung und Biege-E-Modul sowie Schlagzähigkeit $a_n$ (reversed notched) bestimmt. Als Verarbeitungsschwindung wurde die Differenz zwischen Formmaß und Maß des auf 20°C abgekühlten Spritzgußteils gemessen und zwar in den Richtungen längs und quer zur Fließrichtung. Der Anisotropiegrad wurde berechnet aus dem Verhältnis der relativen Schwindung in Querrichtung zur relativen Schwindung in Längsrichtung.

Beispiel 2

Wie in Beispiel 1 wurde gemischt, jedoch 40 Gew.-Teile PPS mit 15 Gew.-Teilen Glasfasern und 45 Gew.-Teilen Glimmer.

Vergleich der mechanischen Eigenschaften
 a) nicht abgemischtes, reines PPS
 b) handelsübliches PPS nur mit Glasfasern abgemischt

EP 0 327 884 B1

c) handelsübliches PPS mit Glasfasern und Talkum.

| | Glasfaser (Gew.-%) | Talkum (Gew.-%) | Biegefestig- keit[MPa] | Biege-E-Modul [MPa] |
|---|---|---|---|---|
| a) PPS (unverstärkt) | - | - | 125 | 3000 |
| b) Ryton®, Typ R4 | 40 | - | 200 | 12 000 |
| c) Tedur®, KU 1-9521 | 30 | 30 | 160 | 17 000 |

| | Randfaser- dehnung (%) | Schlagzähig- keit $a_n$ [kJ/m$^2$] | Anisotropiegrad[d] |
|---|---|---|---|
| Ryton® (Phillips) | 1,5 | 16 | 2,5 |
| Tedur® (BAYER) | 1,1 | 10 | 2,6 |

d) (relative Schwindung quer)/(relative Schwindung längs)

| Beispiel | Glasfaser (Gew.-%) | Glimmer (Gew.-%) | Biegefestig-keit [MPa] | Randfaser-dehnung[%] |
|---|---|---|---|---|
| 1 | 30 | 30 | 252 | 1,5 |
| 2 | 15 | 45 | 183 | 1,15 |

| Beispiel | Schlagzähig-keit [kJ/m²] | Anisotropiegrad (Schwindung quer/längs) | Biege-E-Modul (MPa) |
|---|---|---|---|
| 1 | 26 | 2,5 | 17 400 |
| 2 | 17 | 1,9 | 17 900 |

## Patentansprüche

1. Mischungen aus:
   A) 20 bis 80 Gew.-% Polyarylensulfiden,
   B) 10 bis 60 Gew.-% Glasfasern,
   C) 60 bis 10 Gew.-% handelsüblichem Glimmer Micro Mica W1®, bei dem 91 Gew.-% der Teile Kleiner als 10 μm sind,
   wobei sich die Angabe Gew.-% auf die Summe der Komponeten A + B + C bezieht und gegebenenfalls 0.1 bis 10 Gew.-% weiteren üblichen Zusatzstoffen.

2. Mischung nach Anspruch 1, dadurch gekennzeichnet, daß die Komponente A) aus Polyphenylensulfid besteht.

5

**3.** Mischung nach Anspruch 1, dadurch gekennzeichnet, daß die Glasfaser beschlichtet ist.

**4.** Mischungen nach Anspruch 1, dadurch gekennzeichnet, daß der Glimmer vorbehandelt ist.

**5.** Mischungen nach Anspruch 1, dadurch gekennzeichnet, daß zusätzlich 0,1 bis 2 Gew.-% Entformungsmittel zugesetzt werden.

**6.** Mischungen nach Anspruch 5, dadurch gekennzeichnet, daß als weiterer Zusatzstoff E-Wachs eingesetzt wird.

**7.** Verwendung von Mischungen nach Anspruch 1 zur Herstellung von Formkörpern, Folien und Fasern.

**Claims**

**1.** Mixtures of
A) from 20 to 80% by weight of polyarylene sulphides,
B) from 10 to 60% by weight of glass fibres and
C) from 60 to 10% by weight of commercial mica, Micro Mica W1[R] in which 91% by weight of the particles are smaller than 10 $\mu$m,
the percentages by weight being based on the sum of components A + B + C, and optionally from 0.1 to 10% by weight of other, conventional additives.

**2.** A mixture according to Claim 1, characterised in that component A) consists of polyphenylene sulphide.

**3.** A mixture according to Claim 1, characterised in that the glass fibre is sized.

**4.** Mixtures according to Claim 1, characterised in that the mica is pretreated.

**5.** Mixtures according to Claim 1, characterised in that from 0.1 to 2% by weight of mould release agents are introduced in addition.

**6.** Mixtures according to Claim 5, characterised in that E-wax is used as additional additive.

**7.** The use of mixtures according to Claim 1 for the production of mouldings, films and fibres.

**Revendications**

**1.** Mélanges de
**A)** 20 à 80 % en poids de sulfures de polyarylène,
**B)** 10 à 60 % en poids de fibres de verte,
**C)** 60 à 10 % en poids du mica du commerce Micro Mica W1, dans lequel 91 % en poids des particules sont inférieures à 10 $\mu$m,
les pourcentages en poids se rapportant à la somme des composants A + B + C, et le cas échéant 0,1 à 10 % en poids d'autres additifs usuels.

**2.** Mélange selon revendication 1, caractérisé en ce que le composant A consiste en sulfure de polyphénylène.

**3.** Mélange selon revendication 1, caractérisé en ce que les fibres de verre sont ensimées.

**4.** Mélanges selon revendication 1, caractérisés en ce que le mica a été traité au préalable.

**5.** Mélanges selon revendication 1, caractérisés en ce qu'ils contiennent en outre de 0,1 à 2 % en poids d'agents de démoulage.

**6.** Mélanges selon revendication 5, caractérisés en ce qu'ils contiennent en tant qu'autre additif de la cire E.

7. Utilisation des mélanges selon revendication 1 pour la fabrication d'objets moulés, de feuilles et de fibres.